Europäisches Patentamt

European Patent Office

Office européen des brevets

(11) Veröffentlichungsnummer: **0 311 905**
**A2**

## (12) EUROPÄISCHE PATENTANMELDUNG

(21) Anmeldenummer: 88116551.8

(22) Anmeldetag: 06.10.88

(51) Int. Cl.⁴: **C08F 220/12 , C08F 2/24 ,**
**C09D 3/74 , D06M 15/263**

(30) Priorität: 14.10.87 DE 3734754

(43) Veröffentlichungstag der Anmeldung:
**19.04.89 Patentblatt 89/16**

(84) Benannte Vertragsstaaten:
**AT BE CH DE ES FR GB GR IT LI LU NL SE**

(71) Anmelder: **Henkel Kommanditgesellschaft auf**
**Aktien**
**Postfach 1100 Henkelstrasse 67**
**D-4000 Düsseldorf 1(DE)**

(72) Erfinder: **Schlüter, Kaspar, Dr.**
**Spreestrasse 26**
**D-5650 Solingen 2(DE)**
Erfinder: **Wüstnienhaus, Bernhard**
**Mühlenstrasse 243**
**D-4050 Mönchengladbach 2(DE)**
Erfinder: **Schieferstein, Ludwig, Dr.**
**Am Hang 15**
**D-4030 Ratingen 1(DE)**
Erfinder: **Conradi, Joachim**
**Kaldenberger Strasse 28**
**D-4000 Düsseldorf 13(DE)**

(54) **Schlichtemittel, ihre Herstellung und Verwendung.**

(57) Offenbart werden schwach saure, leicht entfernbare Schutzüberzüge liefernde, lösemittelfreie, wäßrige Schlichtemittel auf Basis wäßriger Polyacrylatdispersionen bzw. Polyacrylatemulsionen, erhältlich durch Copolymerisation in wäßrigem Medium von

(a) wenigstens einem mindestens eine Carboxylgruppe tragenden Monomeren,

(b) wenigstens einem anderen, hydrophoben Monomeren,

(c) wenigstens einem Emulgator, sowie

(d) gegebenenfalls üblichen Hilfs- und/oder Zusatzstoffen,

wobei das Gewichtsverhältnis (a) : (b) bei 1 : 20 bis 1 : 1, die Summe von (a) und (b) von 5 bis 55 Gew.-% und die Menge an (c) 0,05 bis 5 Gew.-% beträgt, wobei die Umsetzungstemperatur zwischen 40 und 100 °C liegt, dadurch gekennzeichnet, daß das Monomere (a) vor der Copolymerisation zu 5 bis 50 Mol-% neutralisiert worden ist und die nach der Copolymerisation erhaltene Polyacrylatdispersion bzw. Polyacrylatemulsion

(e) einen pH-Wert von über 4 bis 6 aufweist.

sowie ihre Herstellung und Verwendung.

EP 0 311 905 A2

## Schlichtemittel, ihre Herstellung und Verwendung

Die Erfindung betrifft Schlichtemittel auf Basis wäßriger Polyacrylatdispersionen oder Polyacrylatemulsionen, die zur Ausbildung von Schutzüberzügen geeignet sind, wie sie beispielsweise zum Schlichten von Fasergarnen und Filamentfäden verwendet werden können, und die mittels leicht alkalischer Medien leicht entfernbar sind.

Weiterhin betrifft die vorliegende Erfindung Verfahren zur Herstellung dieser Schlichtemittel und deren Verwendung.

Synthetische Schlichtemittel auf Basis von Polyacrylaten, die alkalilösliche, insbesondere carboxylgruppenhaltige Copolymere enthalten, sind als Textilhilfsmittel aus der Technik bekannt. In diesem Zusammenhang wird auf Ullmanns Encyklopädie der Technischen Chemie, 4. Auflage, Band 23 (1983), Seite 1 ff, insbesondere S. 15 ff verwiesen.

Aus dem Filamentbereich ist beispielsweise eine Wasser-Webstuhl-Schlichte (water-jet-loom-size) bekannt, die im wesentlichen aus wasserlöslichem Ammoniumpolyacrylat besteht, das beim Trocknen durch Ammoniakabspaltung in die wasserunlösliche, nur schwach quellbare Säureform übergeht. Ein derart präpariertes Polyester- oder Polyamidgarn kann problemlos verwebt werden, und nach dem Verweben kann die Schlichte leicht alkalisch ausgewaschen werden. Synthetische Schlichtemittel auf Basis von Polyacrylaten werden aus wäßriger oder wäßrig-organischer Lösung aufgebracht. Ein Einsatz von Dispersionen, die einen höheren Feststoffgehalt erlauben, ist unbekannt.

Der Einsatz scheiterte bislang vermutlich an der Tatsache, daß es nicht möglich war, carboxylgruppenhaltige Copolymere als Zwei-Phasen-System herzustellen, die nicht eine zu stark saure Einstellung besitzen (der Carboxylgruppengehalt des Polymeren ist für die spätere Auswaschbarkeit mit (leicht) alkalischen Medien entscheidend). Dispersionen nach dem Stand der Technik reagieren sauer mit pH-Werten im Bereich von ca. 2,5 bis 3,5 und zeigen folglich korrosive und gewebeschädigende Eigenschaften.

Der vorliegenden Erfindung liegt die Aufgabe zugrunde, ein neues synthetisches Schlichtemittel auf Basis einer wäßrigen Polyacrylatdispersion bzw. Polyacrylatemsulsion zu schaffen. Dieses soll einen nur schwach sauren pH-Wert aufweisen, so daß die Dispersion weniger korrosive Eigenschaften aufweist als übliche Dispersionen des Standes der Technik. Durch die Applikation aus wäßriger Phase entstehen weiterhin geringere Umweltprobleme. Die Schlichtemittel bilden auf Fasern nach dem Verdunsten. des Wasseranteils einen wasserfesten Film, der mit Hilfe. von alkalischen Mitteln leicht zu entfernen ist.

Es wurde nun gefunden, daß eine nur ca. 5 bis 50 %ige Neutralisation der carboxylgruppenhaltigen Comonomeren vor Durchführung der Emulsionspolymerisation koagulatarme Schlichtemittel auf Basis von Polymerdispersionen ergibt, deren pH-Werte in dem gewünschten Bereich von 4 bis 6 liegen, obwohl Ausgangsemulsionen der Monomermischung in Wasser einen Wert von nur ca. 3,5 aufweisen.

Die vorliegende Erfindung betrifft folglich schwach saure, leicht entfernbare Schutzüberzüge liefernde, lösemittelfreie, wäßrige Schlichtemittel auf Basis wäßriger Polyacrylatdispersionen bzw. Polyacrylatemulsionen.

Dies sind schwach saure, leicht entfernbare Schutzüberzüge liefernde, lösemittelfreie, wäßrige Schlichtemittel auf Basis wäßriger Polyacrylatdispersionen bzw. Polyacrylatemulsionen, erhältlich durch Copolymerisation in wäßrigem Medium von

    (a) wenigstens einem mindestens eine Carboxylgruppe tragenden Monomeren,
    (b) wenigstens einem anderen, hydrophoben Monomeren,
    (c) wenigstens einem Emulgator, sowie
    (d) gegebenenfalls üblichen Hilfs- und/oder Zusatzstoffen,

wobei das Gewichtsverhältnis (a) : (b) bei 1 : 20 bis 1 : 1, die Summe von (a) und (b) von 5 bis 55 Gew.-% und die Menge an (c) 0,05 bis 5 Gew.-% beträgt, wobei die Umsetzungstemperatur zwischen 40 und 100 °C liegt, die dadurch gekennzeichnet sind, daß das Monomere (a) vor der Copolymerisation zu 5 bis 50 Mol-% neutralisiert worden ist und die nach der Copolymerisation erhaltene Polyacrylatdispersion bzw. Polyacrylatemulsion

    (e) einen pH-Wert von über 4 bis 6 aufweist.

Die erfindungsgemäßen Schlichtemittel werden auf Basis wäßriger Polyacrylatdispersionen bzw. Polyacrylatemulsionen durch Copolymerisation in wäßrigem Medium von wenigstens einem mindestens eine Carboxylgruppe tragenden Monomeren und wenigstens einem anderen, hydrophoben Monomeren erhalten.

Für die Darstellung der erfindungsgemäßen Schlichtemittel geeignete, eine Carboxylgruppe tragende Monomere sind Acrylsäure, Methacrylsäure, Crotonsäure, Itaconsäure, Citraconsäure, Fumarsäure, Maleinsäure oder in der Polymerisationstecknik übliche Derivate dieser Säuren, beispielsweise Halogenacrylsäuren, wie etwa @-Chloracrylsäure, oder Anhydride oder Halbester der genannten Dicarbonsäuren. Diese können allein oder in Kombination mit anderen Carboxylgruppen tragenden Monomeren verwendet werden. Bevorzugt sind Methacrylsäure und/ oder Acrylsäure.

Einen entscheidenden Einfluß auf die Eigenschaften der erfindungsgemäßen Schlichtemittel auf Basis wäßriger Polyacrylatdispersionen bzw. Polyacrylatemulsionen hat die Tatsache, daß diese Carboxylgruppen tragende Monomere enthalten, die vor der Copolymerisation zu 5 bis 50 Mol-% mit einer Base neutralisiert worden sind. Oberhalb von 50 Mol-% kommt es zu einer vermehrten Koagulatbildung, die sich nachteilig auf die Polyacrylatdispersionen bzw. Polyacrylatemulsionen und die hieraus erhaltenen erfindungsgemäßen Schlichtemittel auswirkt. Vorzugsweise wird ein Bereich von 5 bis 25 Mol%, besonders vorteilhaft von 8 bis 15 Mol-%, verwendet.

Als Neutralisierungsmittel können organische oder anorganische basische Verbindungen verwendet werden.

Vorzugsweise wird Ammoniakwasser für die partielle Neutralisation verwendet.

Durch diese partielle Neutralisation der Carboxylgruppen tragenden Monomere vor der Copolymerisation werden Polyacrylatdispersionen bzw. Polyacrylatemulsionen erhalten, bei denen die Polyacrylatdispersion bzw. Polyacrylatemulsionen pH-Werte von 4 bis 6, vorzugsweise von 4,5 bis 5,5, aufweisen. Polyacrylatdispersionen bzw. Polyacrylatemulsionen mit derart schwach sauren pH-Werten können somit auch bei säureempfindlichen Fasern verwendet werden.

Für die Darstellung der erfindungsgemäßen Schlichtemittel geeignete hydrophobe Monomere sind solche, die ausgewählt sind aus der Gruppe der Alkyl-acrylate, Alkyl-methacrylate, Hydroxyalkyl-acrylate, Hydroxyalkyl-methacrylate, Vinylether, Vinylester, Vinylaromaten und ungesättigter Nitrile. Bevorzugt sind hydrophobe Monomere, ausgewählt aus der Gruppe der Alkyl-acrylate, Alkyl-methacrylate, Hydroxyalkyl-acrylate, Hydroxyalkyl-methacrylate, Styrol und Acrylnitril.

Für die Darstellung der erfindungsgemäßen Schlichtemittel geeignete Emulgatoren sind anionische Emulgatoren, insbesondere ein Alkylalkoholethoxysulfat und/oder Alkylphenolethoxysulfat oder deren Gemische.

Für die Darstellung der erfindungsgemäßen Schlichtemittel übliche Hilfs- und/oder Zusatzstoffe sind Radikalinitiatoren wie beispielsweise wasserlösliche Salze der Peroxydischwefelsäure, sowie ferner Farbstoffe, Pigmente und/oder Stabilisatoren.

Bei den erfindungsgemäßen Schlichtemitteln auf Basis wäßriger Polyacrylatdispersionen bzw. Polyacrylatemulsionen kann das Gewichtsverhältnis des Carboxylgruppen tragenden Monomeren zum hydrophoben Monomeren bei 1 : 20 bis 1 : 1 liegen; die Summe der Monomeren kann 5 bis 55 Gew.-% betragen. Die Menge an Emulgator kann 0,05 bis 5 Gew.-% betragen und die Umsetzungstemperatur für die Copolymerisation kann zwischen 40 und 100 °C liegen.

Bei den erfindungsgemäßen Schlichtemitteln auf Basis wäßriger Polyacrylatdispersionen bzw. Polyacrylatemulsionen wird die Copolymerisation so durchgeführt, daß, soweit die Monomeren zu (a) und zu (b) miteinander mischbar sind, man diese gemischt und zusammen in die die Komponenten (c) und (d) enthaltende Reaktionsmischung zutropft und soweit (a) und (b) nicht miteinander mischbar sind, man diese getrennt parallel zutropft.

Nach einer bevorzugten Ausführungsform der vorliegenden Erfindung werden Schlichtemittel auf Basis wäßriger Polyacrylatdispersionen bzw. Polyacrylatemulsionen erhalten, indem man

(a) Acrylsäure und/oder Methacrylsäure, die mittels Ammoniak zu 8 - 15 Mol-% neutralisiert worden ist,

(b) hydrophoben Monomeren ausgewählt aus der Gruppe der Alkyl-acrylate, Alkyl-methacrylate, Hydroxyalkyl-acrylate, Hydroxyalkyl-methacrylate, Styrol und Acrylnitril, wobei das Gew.-%-Verhältnis von (a) : (b) zwischen etwa 22,5 : 77,5 und 7 : 93 liegt und (a) und (b) in einer Gesamtmenge von 10 bis 40 Gew.-% vorliegen,

(c) wenigstens eines anionischen Emulgators, wie insbesondere eines Alkylalkohol- bzw. Alkylphenol ethoxysulfates in einer Menge von 0,2 bis 2 Gew.-%,

(d) wenigstens eines Radikalinitiators, sowie ferner Farbstoffen und/oder Stabilisatoren
in wäßrigem Medium copolymerisiert und diese Dispersionen bzw. Emulsionen als temporären Faserschutz auf Geweben aufbringt.

Die Erfindung betrifft außerdem Verfahren zur Herstellung von Schlichtemitteln auf Basis wäßriger Polyacrylatdispersionen bzw. Polyacrylatemulsionen der oben beschriebenen Art, die dadurch gekennzeichnet sind, daß das mindestens eine Carboxylgruppe tragende Monomere vor der Copolymerisation zu 5 bis 50 Mol-% neutralisiert worden ist, und die nach der Copolymerisation erhaltene Polyacrylatdispersion bzw. Polyacrylatemulsion einen pH-Wert von über 4 bis 6 aufweist.

Vorzugsweise kann dieses Monomere vor der Copolymerisation zu 5 bis 25 Mol-%, besonders bevorzugt zu 8 bis 15 Mol-% mit einer Base, vorzugsweise mit Ammoniakwasser, neutralisiert werden.

Vorzugsweise hat die so erhaltene Polyacrylatdispersion einen pH-Wert von 4,5 bis 5,5.

Schließlich betrifft die Erfindung die Verwendung von Schlichtemitteln auf Basis wäßriger Polyacrylatdispersionen bzw. Polyacrylatemulsionen zum Schlichten von Fasergarnen und Filamentfäden.

Die erfindungsgemäßen Schlichtemittel auf Basis wäßriger Polyacrylatdispersionen bzw. Polyacrylatemulsionen werden im folgenden durch Herstellungsbeispiele und Anwendungsbeispiele erläutert.

Allgemeines Herstellungsbeispiel

A) Wenn die teilneutralisierten Carboxylgruppen tragenden Comonomeren bei Raumtemperatur in der Mischung der restlichen Comonomeren löslich sind, kann mit nur einem Monomerenzulauf gearbeitet werden:

In einem Reaktionsgefäß, das ca. 150 Volumenteile faßt und mit Rückflußkühler, Rührwerk und Zudosiergefäß versehen ist, werden 67,7 Gew.-Teile Wasser, 2 Gew.-Teile einer 30 %igen wäßrigen Lösung eines üblichen Ethersulfatemulgators (z.B. Disponil® AES 60, HENKEL) und 0,3 Gew.-Teile Ammoniumperoxydisulfat auf 80 °C erhitzt. Bei dieser Temperatur werden innerhalb von zwei Stunden 30 Gew.-Teile einer Monomerenmischung, deren Carboxylgruppen tragende Anteile mit 25 %igem Ammoniak zu 15 % neutralisiert wurden, gleichmäßig zugetropft. Nach Erkalten des Ansatzes wird das in einer Menge von 0,03 bis 0,5 Gew.-Teilen gebildeten Koagulat über einen Filtersiebbeutel der Maschenweite 80 bis 250 μm abgetrennt.

B) Generell kann auch mit mehr als einem Zulauf gearbeitet werden.

Dies empfiehlt sich insbesondere dann, wenn die teilneutralisierten Carboxylgruppen tragenden Comonomeren in der Mischung der übrigen Monomeren unlöslich sind:

In einem Reaktionsgefäß, das ca. 150 Volumenteile faßt und mit Rückflußkühler, Rührwerk und zwei Dosiergefäßen versehen ist, werden 67,7 Gew.-Teile Wasser, 2 Gew.-Teile einer 30 %igen wäßrigen Lösung eines üblichen Ethersulfatemulgators (z.B. Disponil® AES 60, HENKEL) und 0,3 Gew.-Teile Ammoniumperoxidisulfat vorgelegt und auf 80 °C erhitzt. Bei dieser Temperatur werden innerhalb von 2 Stunden 30 Gew.-Teile einer Mischung der Carboxylgruppen freien Monomeren und der zu 8 bis 13 % (s. Tabelle) mit 25 %igem Ammoniak neutralisierten carboxylgruppentragenden Monomeren (evtl. gelöst in einer geringen Menge Wasser, die erforderlichenfalls vom Wasser in der Vorlagemischung eingespart wurde) parallel zugetropft. Es wird 30 Minuten bei 80 °C nachgerührt. Nach Erkalten des Ansatzes wird das in einer Menge von 0,03 bis 1,5 Gew.-Teilen gebildete Koagulat über einen Filtersiebbeutel der Maschenweite 80 bis 250 μm abgetrennt.

4

Tabelle

| Einzelbeispiele | | | | |
|---|---|---|---|---|
| (erhalten nach Polymerisationsmethode B) | | | | |
| Monomerbaustein zusammensetzung (Gew.-%) | Polyacrylatdispersion | Neutralisationsgrad der eingesetzten Monomersäure | pH-Wert vorder Polymerisation | pH-Wert nach der Polymerisation |
| 40 Ethylacrylat<br>40 Ethylmethacrylat<br>20 Acrylsäure | 1 | 8% | 3,2 | 4,0 |
| 25 Butylacrylat<br>55 Ethylmethacrylat<br>20 Acrylsäure | 2 | 8% | 3,5 | 4,0 |
| 87 Methylacrylat<br>6 Methylmethacrylat<br>5 Methacrylsäure<br>2 Acrylsäure | 3 | 13% | 3,7 | 5,1 |

[1] gewonnen an einer ca. 50 %igen wäßrigen Lösung der teilneutralisierten Carboxylgruppen tragenden Komponenten

EP 0 311 905 A2

Anwendungsbeispiel:

Die vorstehend hergestellten Polyacrylatdispersionen 1 bis 3 wurden hinsichtlich ihrer Anwendungseigenschaften mit einem Schlichtemittel auf Polyacrylatbasis nach dem Stand der Technik dem Schlichtemittel Schlichte SF (Hersteller: BASF AG) zusammen geprüft.

Hierbei wurden folgende Ergebnisse erhalten:

## 1. Filmbeurteilung

Gewünscht ist eine zäh-elastische, nicht klebrige Beschaffenheit der Filme

## 1.1 bei Raumtemperatur

Polyacrylatdispersion 3, Polyacrylatdispersion 1 und Schlichte SF bilden relative weiche, flexible Filme; Polyacrylatdispersion 2 bildet einen relativ harten, spröden Film.

## 1.2 bei 130 °C (nur Klebrigkeit beurteilt)

Polyacrylatdispersion 3 klebt wenig;
Polyacrylatdispersion 1 und 2 sowie Schlichte SF kleben kaum.

## 2. Schlichteversuch

## 2.1 auf Filamentgarn (Polyester 7, 8 tex f 26)

| Versuchsbedingungen: | |
|---|---|
| 10 % | Aktivsubstanz |
| 30 m/min | Maschinengeschwindigkeit |
| 4 bar | Quetschwerkdruck |
| 60 °C | Flottentemperatur |
| 120 °C | Trocknungstemperatur |

Es sind 5 Fäden parallel gescheuert worden und der Fadenschluß nach 5, 10 und 15 Hüben beurteilt worden.

Der Fadenschluß wurde visuell beurteilt, nachdem die Fäden zwecks Simulierung des Webprozesses einer mechanischen Belastung am Scheuertester, hergestellt vom Fiber Research Institute TNO, Delft, Niederlande, unterworfen wurden.

Die Beurteilung ist 3 x wiederholt worden.

6

| Produckt | Fadenschluß nach | | | | | | | | |
|---|---|---|---|---|---|---|---|---|---|
| | 5 Hüben | | | 10 Hüben | | | 15 Hüben | | |
| | 1. | 2. | 3. | 1. | 2. | 3. | 1. | 2. | 3. |
| Polyacrylatdispersion 1 | - | + | -- | -- | +- | -- | -- | - | -- |
| Polyacrylatdispersion 2 | -- | -- | -- | -- | -- | -- | -- | -- | -- |
| Polyacrylatdispersion 3 | + | + | + + | - | + + | +- | - | +- | +- |
| Schlichte SF | + + | +- | + + | - | +- | +- | - | - | - |

Fadenschlußbeurteilung nach Scheuertest

+ + = sehr gut

+ = gut

+- = zufriedenstellend

- = schlecht

-- = sehr schlecht

## 2.2 auf Stapelfasern (Nm 50/1 Polyester/Baumwolle)

| Versuchsbedingungen | |
|---|---|
| 6 % | Aktivsubstanz |
| 30 m/min | Maschinengeschwindigkeit |
| 4 bar | Quetschwerkdruck |
| 80 °C | Flottentemperatur |
| 120 °C | Trocknungstemperatur |

Der Effekt der Schlichte wird bei Stapelfasern folgendermaßen geprüft:

Es werden 30 Fäden jeweils mit einem Gewicht von 50 g belastet und so lange gescheuert, bis sämtliche Fäden gerissen sind.

| Scheuerwerte | | | | |
|---|---|---|---|---|
| Produkt | nicht neutralisiert | | neutralisiert*) | |
| | 1 %-Wert | 50 %-Wert | 1 %-Wert | 50 %-Wert |
| Polyacrylatdispersion 1 | 157 | 322 | 72 | 140 |
| Polyacrylatdispersion 2 | 124 | 247 | 54 | 118 |
| Polyacrylatdispersion 3 | 50 | 70 | 22 | 77 |
| Schlichte SF | 147 | 236 | | |
| Rohgarn | 17 | 49 | | |

Dargestellt sind die Anzahl von Hüben, die zum Bruch von 1 % bzw. 50 % der Fäden führen

*) Die Neutralisation erfolgte mit 2 %iger NaOH

## 3. Produktverklebung auf den Trocknungsgaletten

| Polyacrylatdispersion 1 | klebt wenig |
| Polyacrylatdispersion 2 | klebt wenig |
| Polyacrylatdispersion 3 | klebt stark |
| Schlichte SF | klebt |

Ergebnisse der Anwendungstests:

Aus den obigen Testdaten folgt ohne weiteres, daß die erfindungsgemäßen Dispersionen hinsichtlich ihrer Filmeigenschaften, der Schlichteversuche und des Produktverklebungstests über mindestens ebenso gute Eigenschaften verfügen wie das Marktprodukt, die Schlichte SF. Darüberhinaus zeigt die Polyacrylatdispersion 3 beim Schlichteversuch auf Filamentgarn, insbesondere im Dauerversuch, deutlich bessere Eigenschaften als das Marktprodukt, und die Polyacrylatdispersion 1 und 2 zeigen gegenüber dem Marktprodukt verbesserte Eigenschaften bei den Schlichteversuchen auf Stapelfasern.


**Ansprüche**

1. Schwach saure, leicht entfernbare Schutzüberzüge liefernde, lösemittelfreie, wäßrige Schlichtemittel auf Basis wäßriger Polyacrylatdispersionen bzw. Polyacrylatemulsionen, erhältlich durch Copolymerisation in wäßrigem Medium von
(a) wenigstens einem mindestens eine Carboxylgruppe tragenden Monomeren,
(b) wenigstens einem anderen, hydrophoben Monomeren,
(c) wenigstens einem Emulgator, sowie
(d) gegebenenfalls üblichen Hilfs- und/oder Zusatzstoffen,
wobei das Gewichtsverhältnis (a) : (b) bei 1 : 20 bis 1 : 1, die Summe von (a) und (b) von 5 bis 55 Gew.-% und die Menge an (c) 0,05 bis 5 Gew.-% beträgt, wobei die Umsetzungstemperatur zwischen 40 und 100 °C liegt, dadurch gekennzeichnet, daß das Monomere (a) vor der Copolymerisation zu 5 bis 50 Mol-% neutralisiert worden ist und die nach der Copolymerisation erhaltene Polyacrylatdispersion bzw. Polyacrylatemulsion
(e) einen pH-Wert von über 4 bis 6 aufweist.

2. Schlichtemittel nach Anspruch 1, dadurch gekennzeichnet, daß man das Carboxylgruppen tragende Monomere vor der Copolymerisation zu 5 bis zu 25 Mol-%, vorzugsweise zu 8 bis 15 Mol-%, mit einer Base neutralisiert.

3. Schlichtemittel nach Ansprüchen 1 und 2, dadurch gekennzeichnet, daß man das Carboxylgruppen tragende Monomere mit Basen, vorzugsweise mit Ammoniakwasser, neutralisiert.

4. Schlichtemittel nach Ansprüchen 1 bis 3, dadurch gekennzeichnet, daß diese einen pH-Wert von 4,5 bis 5,5 aufweist.

5. Schlichtemittel nach Ansprüchen 1 bis 4, dadurch gekennzeichnet, daß man die Copolymerisation so durchführt, daß, soweit die Monomeren zu (a) und zu (b) miteinander mischbar sind, man diese gemischt und zusammen in die die Komponenten (c) und (d) enthaltene Reaktionsmischung zutropft und soweit (a) und (b) nicht miteinander mischbar sind, man diese getrennt parallel zutropft.

6. Schlichtemittel nach Ansprüchen 1 bis 5, dadurch gekennzeichnet, daß das Carboxylgruppen tragende Monomere ausgewählt ist aus der Gruppe der Acrylsäure, Methacrylsäure, Crotonsäure, Itaconsäure, Citraconsäure, Fumarsäure, Maleinsäure oder in der Polymerisationstechnik üblicher Derivate dieser Säuren.

7. Schlichtemittel nach Ansprüchen 1 bis 6, dadurch gekennzeichnet, daß man als Carboxylgruppen tragendes Monomeres Methacrylsäure und/oder Acrylsäure verwendet.

8. Schlichtemittel nach Ansprüchen 1 bis 7, dadurch gekennzeichnet, daß das hydrophobe Monomere ausgewählt ist aus der Gruppe der Alkyl-acrylate, Alkyl-methacrylate, Hydroxyalkyl-acrylate, Hydroxyalkyl-methacrylate, Vinylether, Vinylester, Vinylaromaten und ungesättigter Nitrile.

9. Schlichtemittel nach Ansprüchen 1 bis 8, dadurch gekennzeichnet, daß das hydrophobe Monomere ausgewählt ist aus der Gruppe der Alkyl-acrylate, Alkyl-methacrylate, Hydroxyalkyl-acrylate, Hydroxyalkyl-methacrylate, Styrol und Acrylnitril.

10. Schlichtemittel nach Ansprüchen 1 bis 9, dadurch gekennzeichnet, daß man als Emulgator einen anionischen Emulgator, insbesondere ein Alkylalkoholethoxysulfat und/oder Alkylphenolethoxysulfat verwendet, oder deren Gemische.

11. Schlichtemittel nach Ansprüchen 1 bis 10, dadurch gekennzeichnet, daß sie erhältlich sind durch Copoly merisation in wäßrigem Medium von

(a) Acrylsäure und/oder Methacrylsäure, die mittels Ammoniak zu 8 - 15 Mol-% neutralisiert worden ist,

(b) hydrophoben Monomeren ausgewählt aus der Gruppe der Alkyl-acrylate, Alkyl-methacrylate, Hydroxyalkyl-acrylate, Hydroxyalkyl-methacrylate, Styrol und Acrylnitril, wobei das Gew.-%-Verhältnis von (a) : (b) zwischen etwa 22,5 : 77,5 und 7 : 93 liegt und (a) und (b) in einer Gesamtmenge von 10 bis 40 Gew.-% vorliegen,

(c) wenigstens eines anionischen Emulgators, wie insbesondere eines Alkylalkohol- bzw. Alkylphenolethoxysulfates in einer Menge von 0,2 bis 2 Gew.-%,

(d) wenigstens eines Radikalinitiators, sowie ferner Farbstoffen und/oder Stabilisatoren.

12. Verfahren zur Herstellung von Schlichtemitteln auf Basis wäßriger Polyacrylatdispersionen bzw. Polyacrylatemulsionen nach Ansprüchen 1 bis 11, dadurch gekennzeichnet, daß das mindestens eine Carboxylgruppe tragende Monomere vor der Copolymerisation zu 5 bis 50 Mol-% neutralisiert worden ist und die nach der Co polymerisation erhaltene Polyacrylatdispersion bzw. Polyacrylatemulsion einen pH-Wert von über 4 bis 6 aufweist.

13. Verfahren nach Anspruch 12, dadurch gekennzeichnet, daß man das Carboxylgruppen tragende Monomere vor der Copolymerisation zu 5 bis zu 25 Mol-%, vorzugsweise zu 8 bis 15 Mol-%, mit einer Base neutralisiert.

14. Verfahren nach Ansprüchen 12 und 13, dadurch gekennzeichnet, daß man das Carboxylgruppen tragende Monomere mit Basen, vorzugsweise mit Ammoniakwasser, neutralisiert.

15. Verfahren nach Ansprüchen 12 bis 14, dadurch gekennzeichnet, daß die erhaltene Polyacrylatdispersion einen pH-Wert von 4,5 bis 5,5 aufweist.

16. Verwendung der Schlichtemittel auf Basis wäßriger Polyacrylatdispersionen bzw. Polyacrylatemulsionen nach Ansprüchen 1 bis 11 zum Schlichten von Fasergarnen und Filamentfäden.